**Europäisches Patentamt**

**European Patent Office**

**Office européen des brevets**

(19)

(11) Veröffentlichungsnummer: **0 180 772**

**A1**

(12) # EUROPÄISCHE PATENTANMELDUNG

(21) Anmeldenummer: **85112547.6**

(22) Anmeldetag: **03.10.85**

(51) Int. Cl.⁴: **G 01 B 11/00**
**G 01 B 11/24, G 01 V 9/04**
**G 06 K 7/10**

(30) Priorität: **08.10.84 DE 3436915**

(43) Veröffentlichungstag der Anmeldung:
**14.05.86 Patentblatt 86/20**

(84) Benannte Vertragsstaaten:
**AT BE CH DE FR GB IT LI LU NL SE**

(71) Anmelder: **Siemens Aktiengesellschaft**
**Berlin und München Wittelsbacherplatz 2**
**D-8000 München 2(DE)**

(72) Erfinder: **Fritz, Harald, Dipl.-Ing. (FH)**
**Hebelstrasse 5**
**D-7517 Waldbronn 3(DE)**

(72) Erfinder: **Wurll, Peter, Dipl.-Ing.**
**Kärcherstrasse 60**
**D-7500 Karlsruhe(DE)**

(54) **Optische Anordnung zur Erkennung der Lage und/oder der Kontur eines Objekts.**

(57) Die Erfindung bezieht sich auf eine optische Anordnung zur Objekterkennung, bei der Licht über Lichtleitfasern (LLF1, LLF2) nahezu direkt an das zu untersuchende Objekt (OB) herangeführt wird und somit eine quasitaktile Objekterkennung durchgeführt wird. Die Lichtleitfasern (LLF1, LLF2) sind in einen Objektträger (OT) integriert, wobei der Reflexionswinkel bzw. die Intensität des zum optischen Sensor (OS) reflektierten Lichts von der Lage bzw. von der Kontur des Objekts (OB) abhängt.

Die Erfindung ist vor allem bei Montage- oder Handhabungsautomaten anwendbar.

FIG 1

EP 0 180 772 A1

Siemens Aktiengesellschaft — 1 — Unser Zeichen
Berlin und München                VPA 84 P 4 4 5 0

Optische Anordnung zur Erkennung der Lage und/oder der
Kontur eines Objekts

Die Erfindung bezieht sich auf eine optische Anordnung
mit den Merkmalen des Oberbegriffs des Anspruchs 1.

Es ist bereits bekannt (R. Bräuer: "VIDEOMAT, ein Fernsehbildauswertesystem für Prozeßsteuerungen und Qualitätskontrollen", Siemens-Energietechnik 4 (1982), Heft 1, Seiten 30 bis 34), mit einer Videokamera die von einem zu untersuchenden Objekt reflektierten Lichtstrahlen zu analysieren. Hierbei werden insbesondere Helligkeits- und Farbunterschiede des Objekts untersucht und gegebenenfalls
Helligkeits- oder Farbsprünge im Objektabbild dazu benutzt, Informationen über die Lage und die Kontur des Objekts zu erhalten. Für die Bildauswertung ist eine umfangreiche Signalbearbeitung und Auswertung des Ausgangssignals der Videokamera notwendig, die jeweils an das zu
untersuchende Objekt und die jeweiligen Umgebungsbedingungen angepaßt werden müssen.

Der Erfindung liegt die Aufgabe zugrunde, eine optische
Anordnung zur Erkennung der Lage und/oder der Kontur eines Objekts zu schaffen, bei der mit einfachen Mitteln
eine Beeinflussung des Lichts der Lichtquelle durch die
Lage und/oder die Kontur des Objekts möglich ist und die
so beeinflußten Lichtstrahlen ohne großen Verarbeitungsaufwand ausgewertet werden können.

Zur Lösung dieser Aufgabe weist eine optische Anordnung
der eingangs angegebenen Art erfindungsgemäß die Merkmale
des Anspruchs 1 auf. Gemäß der Erfindung kann das Licht

Ag 4 Bz / 05.10.1984

der Lichtquelle über die jeweils separat zur Oberfläche des Objektträgers geleiteten Lichtleitfasern zu einzelnen Punkten geführt werden. Die Punkte sind in vorteilhafter Weise rasterförmig auf der Oberfläche des Objektträgers verteilt, so daß eine einfache Auswertung der an dieser Oberfläche anliegenden Objektoberfläche in kartesischen oder auch in Polarkoordinaten möglich ist.

Aus "elektronik industrie" 6, 1984 (ei 546), ist für sich bereits bekannt, optische Sensoren zu verwenden, die an der Oberfläche eines integrierten Schaltkreises flächenhaft angeordnet sind. Diese lichtempfindliche Schicht weist rasterförmig verteilte Photodioden auf, deren Ausgangssignale bereits im integrierten Schaltkreis weiterverarbeitet werden können. Die im Objektträger gemäß der Erfindung vorhandenen Lichtleitfasern können somit im Objektträger selbst oder an seinem Ausgang derartig gebündelt zusammengefaßt werden, daß der Lichtaustritt aus den jeweiligen Lichtleitfasern auf jeweils eine Photodiode oder auf einen Teilbereich der Photodiodenanordnung eines solchen optischen Sensors erfolgt.

Zur Untersuchung eines Objekts ist es bei der erfindungsgemäßen Anordnung lediglich notwendig, daß die am Objektträger anliegende Oberfläche des Objekts einen hinreichenden Reflexionsgrad aufweist. Ansonsten können gemäß der Ansprüche 2 bis 4 elastische Schichten an der Oberfläche des Objektträgers angebracht werden, die einen reflektierenden Belag aufweisen. Es ist hierbei nur notwendig, Wölbungen am reflektierenden Belag anzubringen, die bei Anliegen des zu untersuchenden Objekts ihre Kontur verändern, wodurch somit auch die Reflexionsbedingungen, abhängig von der Lage oder der Kontur des Objekts, verändert sind.

Die Lichtleitfasern können bei der erfindungsgemäßen optischen Anordnung entweder diskret bei der Herstellung des Objektträgers in diesen eingelegt werden oder sie
können auch durch Ausnehmungen im Objektkörper ebenfalls
bei der Herstellung - in der Regel als Gießformteil -
angebracht werden.

Die Beeinflussung der Reflexionsbedingungen durch das zu
untersuchende Objekt kann in vorteilhafter Weise dadurch
geschehen, daß eine optimale Reflexion nur bei nahem Anliegen des Objekts erfolgt und bei einer Entfernung des
Objekts bzw. bei einer Ausnehmung in der Oberfläche des
Objekts keine Reflexion erfolgt. Ebenso ist es aber auch
möglich, bei nahem Anliegen keine Reflexion zuzulassen
und erst bei einer etwas entfernteren Lage der Oberfläche
des zu untersuchenden Objekts eine Reflexion des Lichts
vorzunehmen. Diese unterschiedlichen Reflexionsbedingungen können auf einfache Weise durch entsprechende Ausführungen des Aus- bzw. Eintrittswinkels bzw. der Lage der
Aus- bzw. Eintrittsöffnungen der Lichtleitfasern hergestellt werden.

Die Erfindung wird anhand der Figuren erläutert, wobei
Figur 1 eine Prinzipdarstellung der Lichtführung einer
optischen Anordnung zur Untersuchung eines Objekts und
die Figuren 2 bis 5 unterschiedliche Ausführungsformen
der Oberfläche des Objektträgers mit unterschiedlichen
Reflexionsbedingungen darstellen.

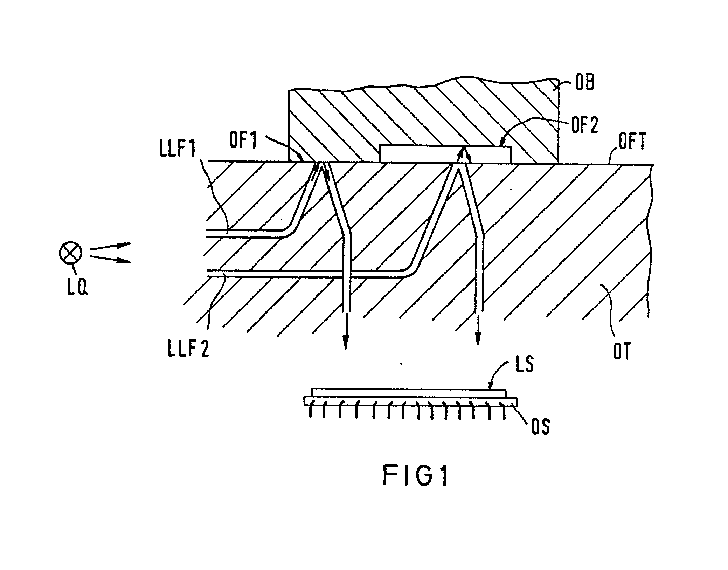

Bei dem Ausführungsbeispiel nach der Figur 1 gehen Lichtstrahlen von einer Lichtquelle LQ in Lichtleitfasern LLF1
und LLF2, die in einem Objektträger OT verlegt sind bzw.
in diesen während des Herstellungsprozesses integriert
sind. Die Lichtleitfasern LLF1 und LLF2 sind unter einem
definierten Winkel zur Oberfläche OFT des Objektträgers OT
geführt, wo sie austreten können und von Oberflächen OF1
bzw. OF2 eines zu untersuchenden Objekts OB reflektiert
werden können.

Beim dargestellten Ausführungsbeispiel werden die aus der Lichtleitfaser LLF1 austretenden Lichtstrahlen von dem Oberflächenstück OF1 des Objekts OB reflektiert und wiederum in die Lichtleitfaser LLF1, die unter einem entsprechenden Winkel von der Oberfläche OFT wegführt, zurückreflektiert. Die Lichtstrahlen der Lichtleitfaser LLF2 werden beim dargestellten Ausführungsbeispiel von einem Oberflächenteil OF2, das von der Oberfläche OFT des Objektträgers OT in einiger Entfernung liegt, reflektiert und gelangen aufgrund der längeren Wegstrecke nicht in die Lichtleitfaser LLF2 zurück. Die Lichtstrahlen der Lichtleitfasern LLF1 und LLF2 gelangen auf eine lichtempfindliche Schicht LS eines optischen Sensors OS. Dieser optische Sensor ist beim dargestellten Ausführungsbeispiel aus einem Photodioden-Array aufgebaut. Die Untersuchung des Objekts OB ist hier dadurch möglich, daß die Lichtstrahlen der Lichtleitfaser LLF1 hier reflektiert werden und somit ein Signal auf der lichtempfindlichen Schicht LS des optischen Sensors detektiert werden kann und aus der Lichtleitfaser LLF2 kein Licht heraustritt, so daß hier eine entsprechende Kontur oder Lage des Objekts OB ermittelt werden kann. Die hier dargestellte Anordnung ermöglicht somit eine quasi-taktile Mustererkennung.

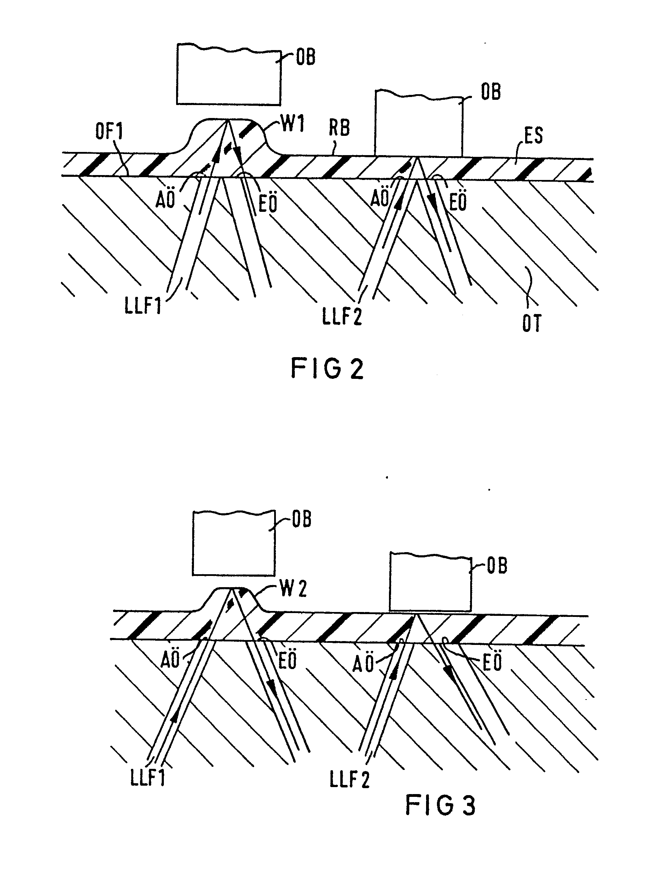

In der Figur 2 ist ein Ausschnitt der Oberfläche OFT des Objektträgers OT mit einer elastischen Kunststoffschicht ES gezeigt, die auf der Seite, wo die zu untersuchenden Objekte OB aufliegen, einen reflektierenden Belag RB aufweist. Die elastische Kunststoffschicht ES weist an dem Lichtaus- bzw. -eintritt der Lichtleitfasern LLF1 bzw. LLF2 noppenartige Wölbungen W1 auf, die sich unter der Belastung des zu untersuchenden Objekts OB verformen können und somit eine Änderung der Lage des reflektierenden Belags hervorrufen.

Beim Ausführungsbeispiel nach der Figur 2 ist in der linken Hälfte für den Fall, daß das Werkstück nicht aufliegt, eine Reflexion der Lichtstrahlen der Lichtleitfaser LLF1 vorhanden, die keinen Wiedereintritt der reflektierten Lichtstrahlen in die Lichtleitfaser LLF1 ermöglicht. Im rechten Teil der Figur 2 bewirkt das nah aufliegende Werkstück OB eine derartige Verformung der noppenartigen Wölbung W1, daß eine direkte Reflexion der Lichtstrahlen der Lichtleitfaser LLF2 wieder in die Lichtleitfaser zurück erfolgt. Somit kann aus der Lichtleitfaser LLF2 ein Signal detektiert werden.

Das Ausführungsbeispiel nach der Figur 3 ist im wesentlichen mit dem Ausführungsbeispiel nach der Figur 2 identisch, jedoch sind hier die Aus- und Eintrittswinkel bzw. die Lage der Aus- und Eintrittsöffnungen derart verändert, daß für den Fall, daß das Objekt nicht am Objektträger OT anliegt (linker Teil), die Lichtstrahlen vollständig in die Lichtleitfaser LLF1 zurückreflektiert werden, und für den Fall, daß das Objekt nah aufliegt (rechter Teil), keine Reflexion erfolgt.

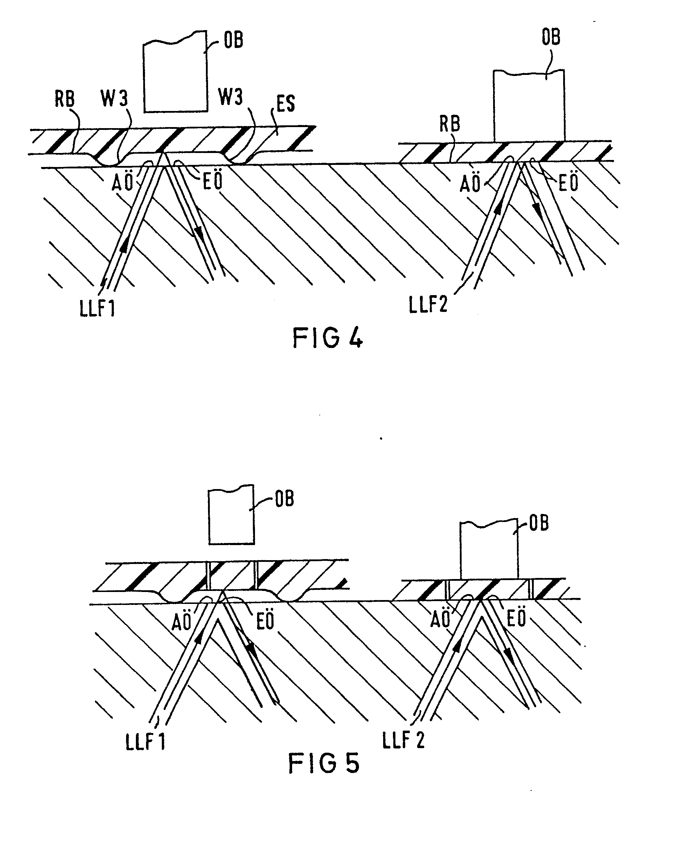

Beim Ausführungsbeispiel nach der Figur 4 ist der reflektierende Belag RB an der Unterseite der elastischen Schicht direkt den Aus- bzw. Eintrittsöffnungen der Lichtleitfasern LLF1 bzw. LLF2 gegenüber angeordnet. Noppenartige Wölbungen W3 sind hier zwischen den Aus- bzw. Eintrittsöffnungen AÖ bzw. EÖ so angeordnet, daß sich beim Nichtaufliegen eines zu untersuchenden Objekts OB der reflektierende Belag RB in einiger Entfernung zu den Öffnungen AÖ und EÖ befindet (linker Teil der Figur 4). Liegt ein zu untersuchendes Objekt OB auf der elastischen Schicht ES auf, so verformen sich die noppenartigen Wölbungen W3 derart, daß der reflektierende Belag RB direkt an die Austritts- bzw. Eintrittsöffnungen AÖ, EÖ herangedrückt wird und somit andere Reflexionsverhältnisse entstehen (rechter Teil).

Die Aus- und Eintrittswinkel bzw. die Lage der Öffnungen AÖ und EÖ sind beim Ausführungsbeispiel nach der Figur 4 so gestaltet, daß sich im linken Teil eine direkte Reflexion zurück in die Lichtleitfaser LLF1 und im rechten Teil keine Reflexion in die Lichtleitfaser LLF2 ergibt.

Das Ausführungsbeispiel nach der Figur 5 entspricht im wesentlichen dem Ausführungsbeispiel nach der Figur 4, jedoch sind hier die Austritts- bzw. Eintrittsöffnungen AÖ und EÖ so gestaltet, daß sich im linken Fall keine Reflexion in die Lichtleitfaser LLF1 und im rechten Fall eine vollständige Reflexion in die Lichtleitfaser LLF2 bei anliegendem Objekt OB ergibt.

7 Patentansprüche
5 Figuren

0180772

Patentansprüche

1. Optische Anordnung zur Erkennung der Lage und/oder der Kontur eines Objekts, mit

- einer Lichtquelle (LQ), von der Licht auf die Oberfläche (OF1, OF2) des Objekts (OB) geführt ist, und

- einem optischen Sensor (OS) mit einer flächenhaften, lichtempfindlichen Schicht (LS), auf den Teile des von der Oberfläche (OF1, OF2) reflektierten Lichtes hinführbar sind,

d a d u r c h   g e k e n n z e i c h n e t ,   daß

- das Objekt (OB) mit seiner zu untersuchenden Oberfläche (OF1, OF2) auf einem Objektträger (OT) aufliegt,

- in den Objektträger (OT) eine Vielzahl Lichtleitfasern (LLF1, LLF2) integriert sind, die
  - von der Lichtquelle (LQ) zur der zu untersuchenden Oberfläche (OF1, OF2) gegenüberliegenden Oberfläche (OFT) des Objektträgers und
  - von der Oberfläche (OFT) des Objektträgers (OT) zu jeweils einem Teilbereich der lichtempfindlichen Schicht (LS) des Sensors (OS) geführt sind, wobei
    - der Austritts- bzw. Eintrittswinkel des Lichts zur Oberfläche (OFT) des Objektträgers (OT) so gewählt ist, daß die reflektierte Lichtmenge abhängig von der Reflexionseigenschaft der Oberfläche (OF1, OF2) ist.

2. Optische Anordnung nach Anspruch 1, d a d u r c h g e k e n n z e i c h n e t ,   daß

- der Objektträger (OT) an seiner Oberfläche (OFT) eine durchsichtige elastische Schicht (ES) aufweist, die an der Seite, an der das Objekt (OB) anliegt, einen reflektierenden Belag (RB) aufweist.

3. Optische Anordnung nach Anspruch 2, d a d u r c h g e k e n n z e i c h n e t , daß

- die elastische Schicht (ES) auf der den reflektierenden Belag (RB) tragenden Seite, gegenüber den jeweiligen Austritts- bzw. Eintrittsöffnungen des Lichts, noppenartige Wölbungen in Richtung zum Objekt (OB) aufweist.

4. Optische Anordnung nach Anspruch 1, d a d u r c h g e k e n n z e i c h n e t , daß

- der Objektträger (OT) an seiner Oberfläche (OFT) eine elastische Schicht (ES) aufweist, die an der dem Objekt (OB) gegenüberliegenden Seite einen reflektierenden Belag (RB) trägt, und daß

- jeweils zwischen den Austritts- bzw. Eintrittsöffnungen des Lichts noppenartige Wölbungen in Richtung zum Objektträger (OT) angebracht sind.

5. Optische Anordnung nach einem der vorhergehenden Ansprüche, d a d u r c h g e k e n n z e i c h n e t , daß

- der Aus- bzw. Eintrittswinkel des Lichts an der Oberfläche (OFT) des Objektträgers (OT) so gewählt ist,
    - daß bei nahem Anliegen des Objekts eine nahezu vollständige Reflexion des Lichts in die Eintrittsöffnung hinein erfolgt und
    - bei einer größeren Entfernung des Objekts (OB) keine Reflexion erfolgt.

6. Optische Anordnung nach einem der Ansprüche 1 bis 4, d a d u r c h g e k e n n z e i c h n e t , daß

- der Aus- bzw. Eintrittswinkel des Lichts an der Oberfläche (OFT) des Objektträgers (OT) so gewählt ist,
    - daß bei einer Entfernung des Objekts (OB) eine nahezu
      vollständige Reflexion des Lichts in die Eintrittsöffnung hinein erfolgt und
    - bei nahem Anliegen des Objekts (OB) keine Reflexion
      erfolgt.

7. Optische Anordnung nach einem der vorhergehenden Ansprüche, d a d u r c h   g e k e n n z e i c h n e t ,
daß

- die Lichtleitfasern (LLF1, LLF2) durch rohrförmige Ausnehmungen im Körper des Objektträgers (OT) gebildet
  sind.

FIG1

FIG 2

FIG 3

FIG 4

FIG 5

# Europäisches Patentamt
## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | GB-A-2 131 989 (UNITED GLASS PLC)<br>* Figuren 1-3; Einführung; Seite 2, Zeilen 11-47 * | 1 | G 01 B 11/00<br>G 01 B 11/24<br>G 01 V 9/04<br>G 06 K 7/10 |
| X | US-A-3 762 800 (G.A. OLSON et al.)<br>* Figuren 1-5; Spalte 2, Zeile 1 - Spalte 3, Zeile 13 * | 1,4-6 | |
| X | IBM TECHNICAL DISCLOSURE BULLETIN, Band 13, Nr. 10, März 1971, Seiten 2859-2860, New York, US; S.A. MANNING et al.: "Rotary embossed credit card scanner"<br>* Figuren 1,2; Seiten 2859-2860 * | 1,4-6 | |
| X | DE-C-3 311 578 (AGFA-GEVAERT AG)<br>* Figuren 1,2; Spalte 2, Zeile 30 - Spalte 3, Zeile 47 * | 1,7 | RECHERCHIERTE SACHGEBIETE (Int Cl 4)<br><br>G 01 B<br>G 01 V<br>G 06 K |
| A | GB-A-2 059 055 (N.G. LEY)<br>* Figuren 1,2; Einführung; Seite 3, Zeilen 13-34; Seite 3, Zeile 64 - Seite 4, Zeile 103 * | 1 | |

Der vorliegende Recherchenbericht wurde für alle Patentansprüche erstellt

| Recherchenort | Abschlußdatum der Recherche | Prüfer |
|---|---|---|
| DEN HAAG | 17-01-1986 | VISSER F.P.C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82